Europäisches Patentamt

European Patent Office

Office européen des brevets

(11) Veröffentlichungsnummer: **0 190 401**
**B1**

(12) # EUROPÄISCHE PATENTSCHRIFT

(45) Veröffentlichungstag der Patentschrift:
28.02.90

(51) Int. Cl. ⁵: **H 02 H 7/093**

(21) Anmeldenummer: **85113500.4**

(22) Anmeldetag: **24.10.85**

(54) Sicherheitseinrichtung für ein elektromotorisch angetriebenes Werkzeug.

(30) Priorität: **07.02.85 DE 3504074**

(43) Veröffentlichungstag der Anmeldung:
**13.08.86 Patentblatt 86/33**

(45) Bekanntmachung des Hinweises auf die Patenterteilung:
**28.02.90 Patentblatt 90/09**

(84) Bennante Vertragsstaaten:
**FR GB IT NL SE**

(56) Entgegenhaltungen:
**US-A-2 818 535**
**US-A-4 020 404**

(73) Patentinhaber: **C. & E. FEIN GmbH & Co.**
**Leuschnerstrasse 41-47**
**D-7000 Stuttgart 1 (DE)**

LIBERGRAF, STOCKHOLM 1990

## Beschreibung

Die Erfindung bezieht sich auf eine Sicherheitseinrichtung für ein elektromotorisch angetriebenes Werkzeug, insbesondere Handwerkzeug, nach dem Oberbegriff des Patentanspruchs.

Derzeit bekannte Elektrowerkzeuge werden über einen Hauptschalter ein- und ausgeschaltet. Die Regelung des Motors erfolgt über eine Regelelektronik, die ihre Ist-Werte z. B. von einem Tachogenerator erhält. Bei Ausfall der Regelelektronik kann es vorkommen, daß die Drehzahl des Motors in unzulässigem Maße ansteigt. Dies bedeutet, daß z. B. bei Winkelschleifern die Drehzahl so hoch werden kann, daß es zum Bersten der Schleifscheibe kommt. Deshalb wurde die Forderung aufgestellt, daß bei Ausfall der Regelelektronik der Motor abgeschaltet wird.

Eine Lösung hierfür bietet der Fliehkraftschalter, wie er bereits in der DE-PS-638 928 beschrieben ist. Diese Art der drehzahlabhängigen Abschaltung des Motors ist jedoch durch die mechanischen Teile sehr aufwendig und somit sehr kostspielig. Auch ist diese Anordnung sehr anfällig gegen Verschmutzung, das wirkt sich z. B. auf die Funktionsgenauigkeit aus.

Eine weitere Sicherheitseinrichtung für einen Elektromotor ist aus der US-PS-2 818 535 bekannt. Bei dieser Einrichtung ist parallel zum Motor ein Relais angeordnet, das auf die Stromzufuhr über einen Relaiskontakt einwirkt. Hier wird aber kein direkt von der Drehzahl abhängiges Signal erzeugt, so daß keine genaue Abschaltung erfolgen kann.

Eine die alle Merkmale des Obergriffs des vorliegenden Anspruchs aufweist, ist aus der US-PS-4 020 404 bekannt. Diese Sicherheitseinrichtung dient dazu, bei Abweichung der Drehzahl eines Elektromotors um einen bestimmten Betrag von der gewünschten normalen Drehzahl, diese abzuändern oder den Motor überhaupt abzuschalten.

Es wurde deshalb nach einer Möglichkeit gesucht, eine drehzahlabhängige Motorabschaltung zu schaffen, die mit geringem Aufwand realisiert werden kann, preiswert ist und deren eingestelter Abschaltwert über die gesamte Lebensdauer des Geräts gleich bleibt.

Die gefundene Lösung ist dadurch gekennzeichnet, daß parallel zum Motor ein Relais angeordnet ist und daß dem Relais ein steuerbarer Halbleiter parallelgeschaltet ist, der bei überschreiten der zulässigen Motordrehzahl durch ein Abschaltsignal eines Schwellwertschalters in den leitenden Zustand gebracht wird und in diesem verharrt, bis der Hauptschalter erneut eingeschaltet wird.

Beschrieben wird die Sicherheitseinrichtung anhand von Zeichnungen. Es zeigen:

Fig. 1   ein Blockschaltbild der Sicherheitseinrichtung;

Fig. 2   ein detalliertes Schaltbild nach Fig. 1.

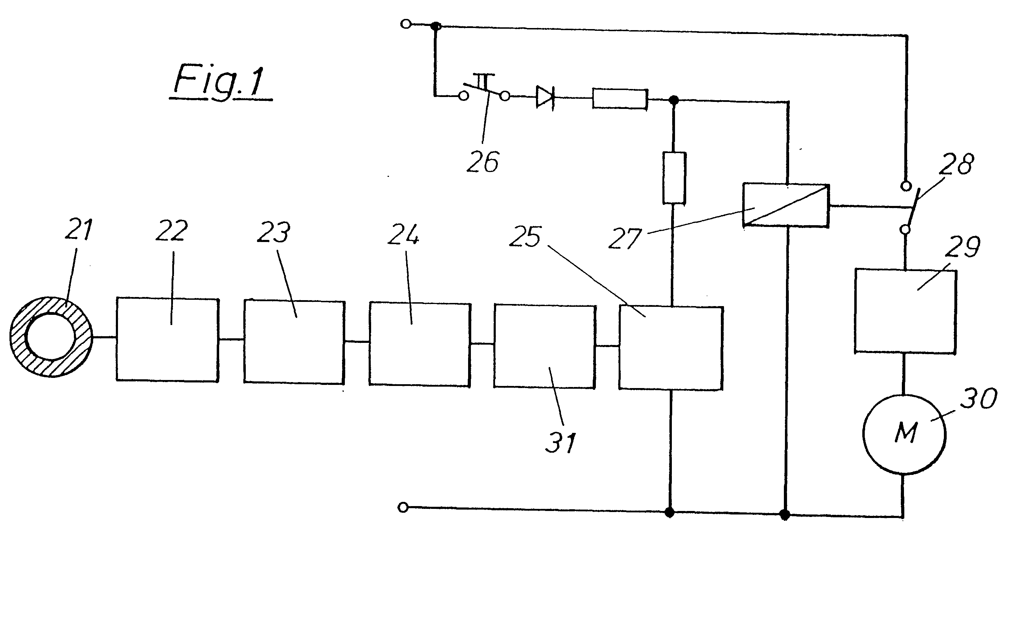

In Fig. 1 ist schematisch ein erstes Ausführungsbeispiel der Sicherheitseinrichtung dargestellt. Der Tachogenerator 21 liefert ein analoges Signal zur tatsächlichen Drehzahl des Motors 30. Dieses Signal wird über den Rssonanzschwingkreis 22 und den Gleichrichter 23 in ein Gleichstromsignal umgewandelt und trifft auf einen Schwellwertschalter 24. Ist der durch den Schwellwertschalter 24 vorgewählte Wert überschritten, erhält der Thyristor 25 ein Signal über den Zündverstärker 31. Der Thyristor 25 wird leitend, das Potential am parallel liegenden Relais 27 fällt ab und der Relaiskontakt 28 öffnet sich. Die Stromzufuhr für den Motor 30 ist unterbrochen. Der Stromfluß über den Hauptschalter 26 läuft nun über den Thyristor 25. Der Lastkreis bleibt so lange unterbrochen, bis der Hauptschalter 26 erneut eingeschaltet wird.

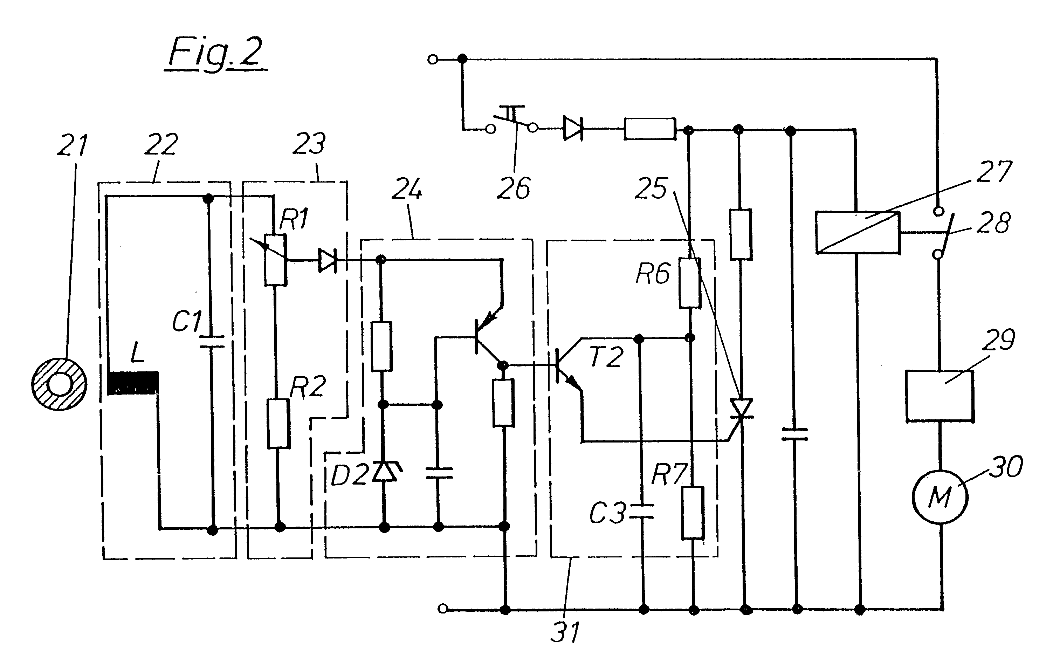

Fig. 2 zeigt das Ausführungsbeispiel nach Fig. 1 in diskretem Aufbau. Die Induktivität L und der Kondensator C1 bilden den Schwingkreis 22. Die Resonanzfrequenz des Schwingkreises kann durch die Wahl des Kondensators C1 bestimmt werden. Der steile Resonanzanstieg der Tachospannung um den Abschaltpunkt begünstigt das Schaltverhalten des nachfolgenden Schwellwertschalters 24. Die induzierte Tachospannung wird im Gleichrichter 23 gleichgerichtet und kann über den Spannungsteiler R1 und R2 eingestellt werden. Der Widerstandswert, der am Widerstand R1 eingestellt wird, dient der Eliminierung von Motorstreuungen. Das Maß für die Schwellwertspannung ist durch die Zenerdiode D2 angegeben. Die nachfolgende Verstärkerschaltung 31 besteht aus dem Transistor T2, den Widerständen R6 und R7 und dem Kondensator C3 und liefert den Zündimpuls für den Thyristor 25.

Ein Fachmann wird auch leicht erkennen können, daß bei der hier dargestellten Lösung der Thyristor 25 durch eine Transistorschaltung ersetzt werden kann, mit der die Stromversorgung für das Relais 27 kurzgeschlossen werden kann.

Die in diesem Ausführungsbeispiel der Sicherheitseinrichtung dargestellte Schaltung stellt eine preiswerte, funktionssichere und leicht zu realisierende Ergänzung zu einer vorhandenen Regelelektronik 29 im Elektrowerkzeug dar. Sie bietet dem Bedienenden beim Ausfall der Regelelektronik Schutz vor den Gefahren einer unkontrolliert drehenden Maschine.

## Patentanspruch

Sicherheitseinrichtung für ein elektromotorisch angetriebenes Werkzeug, das über einen Hauptschalter (26) und eine Regelelektronik (29) einschaltbar ist und über einen Tachogenerator (21) zur Erfassung der Motordrehzahl verfügt, wobei die Sicherheitseinrichtung aus einem Resonanzschwingkreis (22), einem Gleichrichter (23), einem einstellbaren Schwellschwertschalter (24) und einem Relais (27) besteht und über Signale des Tachogenerators (21) derart ansteuerbar ist, daß das Relais (27) über einen Kontakt (28) die Stromzufuhr zu einem Motor (30) unterbricht, dadurch gekennzeichnet, daß das Relais (27) parallel zum Motor angeordnet ist und daß dem Relais (27) ein steuerbarer Halbleiter (25) parallelgeschaltet ist, der bei Überschreiten der zulässigen Motordrehzahl durch ein Abschaltsignal des Schwellwertschalters (24) in den leitenden Zustand gebracht wird und in diesem verharrt, bis der Hauptschalter (26) erneut eingeschaltet wird.

## Claim

A safety device for an electromotive-driven tool which can be switched on through a main switch (26) and through electronic controls (29), and having a tachogenerator (21) for recording the speed of the motor, the safety device consisting of a resonance vibration circuit (22), a rectifier (23), an adjustable threshold switch (24) and a relay (27) and being activatable through signals of the tachogenerator (21) in such a way that the relay (27), through a contact (28), interrupts the supply of current to a motor (30), characterised in that the relay (27) is arranged parallel to the motor (30) and in that a controllable semiconductor (25) is connected in parallel to the relay, which semiconductor, when the permissible motor speed is exceeded, is made conductive by a switch-off signal of the threshold switch (24) and remains conductive until the main switch (26) is switched on again.

## Revendication

Dispositif de sécurité pour un outil qui est entraîné par un moteur électrique, peut être enclenché par l'intermédiaire d'un interrupteur principal (26) et d'une électronique de réglage (29), et est équipé d'un générateur tachymétrique (21) pour détecter la vitesse angulaire du moteur, le dispositif de sécurité comprenant un circuit oscillant résonant (22), un redresseur (23), un commutateur réglable (24) à valeurs de seuil et un relais (27), et étant activable, par l'intermédiaire de signaux du générateur tachymétrique (21), de façon telle que le relais (27) interrompe, par l'entremise d'un contact (28), la délivrance de courant à un moteur (30), caractérisé par le fait que le relais (27) est disposé parallèlement au moteur; et par le fait qu'un semi-conducteur commandable (25), branché en parallèle au relais (27), est mis à l'état conducteur par l'intermédiaire d'un signal de déclenchement du commutateur (24) à valeurs de seuil, lors d'un dépassement de la vitesse angulaire admissible du moteur, et demeure dans cet état jusqu'à ce que l'interrupteur principal (26) soit de nouveau enclenché.

Fig.1

21 22 23 24 25 26 27 28 29 30 31

M

EP 0 190 401 B1

_Fig.2_